# EUROPEAN PATENT APPLICATION

(11) **EP 3 344 016 A1**
(43) Date of publication of application: **04.07.2018**
(21) Application number: 16838737.1
(22) Date of filing: 05.07.2016
(51) Int. Cl.: H05B 37/02

(54) **ILLUMINATION SYSTEM AND PROGRAM**

(30) Priority: 26.08.2015 JP 2015167154
(71) Applicant: Panasonic Intellectual Property Management Co., Ltd., Osaka-shi, Osaka 540-6207 (JP)
(72) Inventor: MIICHI, Nobuhiro, Osaka-shi, Osaka 540-6207 (JP)
(74) Representative: Appelt, Christian W.
(86) International application number: PCT/JP2016/003199
(87) International publication number: WO 2017/033385

(57) **Abstract**

A lighting system (1) includes: a video projector (10) which projects a video image; an image sensor (20) which captures the video image projected by the video projector (10); and a light emitter (30) which emits illumination light using a light source different from a light source of the video projector (10); and a lighting controller (41) which controls the illumination light of the light emitter (30) using statistics related to RGB of a region which is at least a part of the video image captured by the image sensor (20).

## Description

### TECHNICAL FIELD

The present invention relates to a lighting system and a program for use in the lighting system.

### BACKGROUND ART

Semiconductor light-emitting elements such as light emitting diodes (LEDs) and laser diodes (LDs) are expected, for their long product life and low power consumption, to serve as the light sources of various products.

In recent years, projector light sources have faced a transition period in which lamps are replaced by semiconductor light-emitting elements. Thus, the projector light sources are becoming long-lasting and power saving. Accordingly, the usage of projectors intended not only for video projection but also for lighting has been considered.

Meanwhile, the semiconductor light-emitting elements such as LEDs are also used as the light sources of lighting apparatuses, and the usage of the lighting apparatuses intended not only for lighting but also for video projection is also under consideration. For example, Patent Literature (PTL) 1 discloses a lighting apparatus having a lighting function and a video projection function.

Therefore, the use of the video projection technology such that applied to projectors or the like is expected to grow in the future in the lighting industry providing lighting in stores, residential houses, etc.

### Citation List

### Patent Literature

PTL 1: Japanese Unexamined Patent Application Publication No. 2006-127845

### SUMMARY OF THE INVENTION

### TECHNICAL PROBLEM

Generally speaking, when a projector is used in a room such as a conference room, video images are projected on a projection surface such as a screen, in the condition where a lighting apparatus installed in a ceiling or the like is turned off so that the visibility of the projected images can be enhanced.

On the other hand, when a projector is used in a store or residential house, video images are projected onto a wall or floor surface, the surface of a desk, or the like, in the condition where a lighting apparatus is turned on (i.e., in an illuminated environment), which is different from the general case of using a projector in a conference room or the like.

Therefore, in the usage scenario of using a projector in the store or residential house, the lighting apparatus is required to emit illumination light that matches with the video images to be projected onto the wall or floor surface, the surface of the desk, or the like.

The present invention was conceived to meet the above-described requirement, and has an object to provide the lighting system and program which allow the emission of illumination light that matches with video images to be projected.

### SOLUTION TO PROBLEM

In order to achieve the above-described object, one aspect of the lighting system according to the present invention is a lighting system including: a video projector which projects a video image; an image sensor which captures the video image projected by the video projector; a light emitter which emits illumination light using a light source different from a light source of the video projector; and a lighting controller which controls the illumination light using statistics related to RGB of a region which is at least a part of the video image captured by the image sensor.

Note that the present invention can be realized as a program for causing a computer to function as the above-described lighting system or as a computer-readable storage medium that stores the program.

### ADVANTAGEOUS EFFECT OF INVENTION

It is possible to emit illumination light that matches with video images to be projected.

### BRIEF DESCRIPTION OF DRAWINGS

FIG. 1 schematically illustrates a specific example of the application of a lighting system according to Embodiment 1;
FIG. 2 illustrates a schematic structure of the lighting system according to Embodiment 1 and an example of an image captured in that system;
FIG. 3 is a block diagram illustrating a configuration of the lighting system according to Embodiment 1;
FIG. 4 illustrates an example of a conversion table for a conversion from RGB statistics into a color temperature, in the lighting system according to the present exemplary embodiment; and
FIG. 5 is a diagram for explaining a conversion method of converting RGB statistics into a color temperature, in a lighting system according to another exemplary embodiment.

### DESCRIPTION OF EXEMPLARY EMBODIMENT

Hereinafter, exemplary embodiments of the present invention will be described. Note that the subsequently-described exemplary embodiments show specific examples of the present invention. Therefore, the numerical values, structural components, the arrangement and connection of the elements as well as steps and the sequence of the steps, etc. shown in the following embodiments are mere examples, and are not intended to limit the scope of the present invention. Therefore, among the structural components in the following embodiments, components not recited in any one of the independent claims which indicate the broadest concepts of the present invention are described as arbitrary structural components.

Furthermore, the respective figures are schematic diagrams and are not necessarily precise illustrations. Furthermore, in the respective figures, substantially identical components are assigned the same reference signs, and overlapping description is omitted or simplified.

### EMBODIMENT

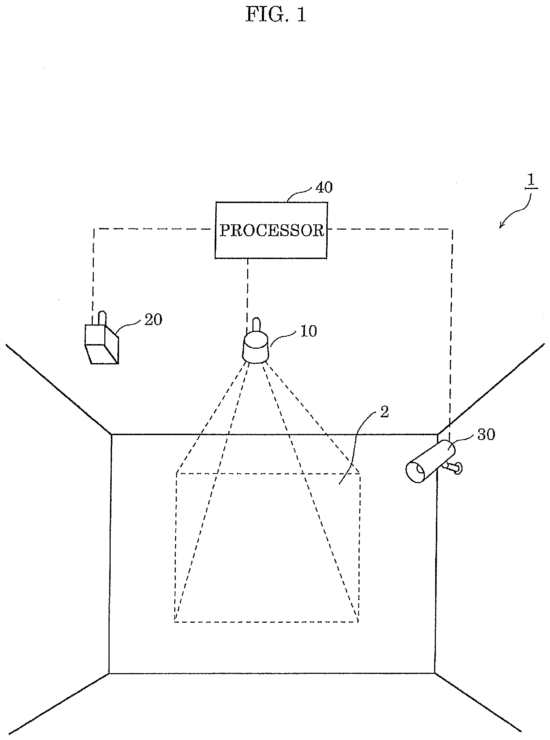

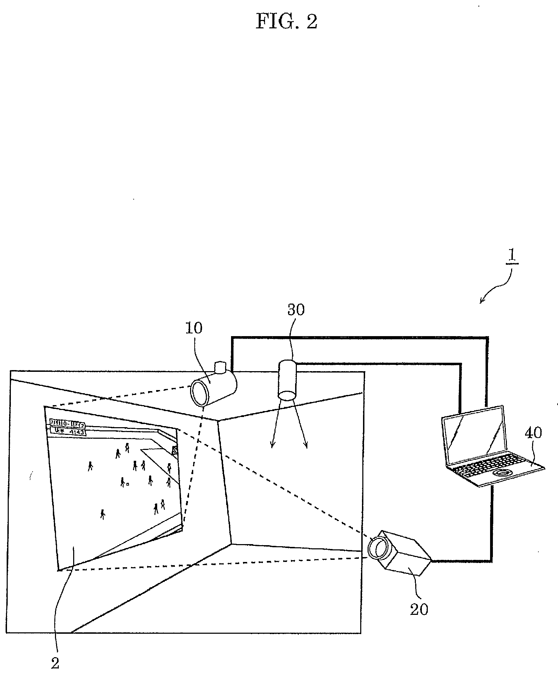

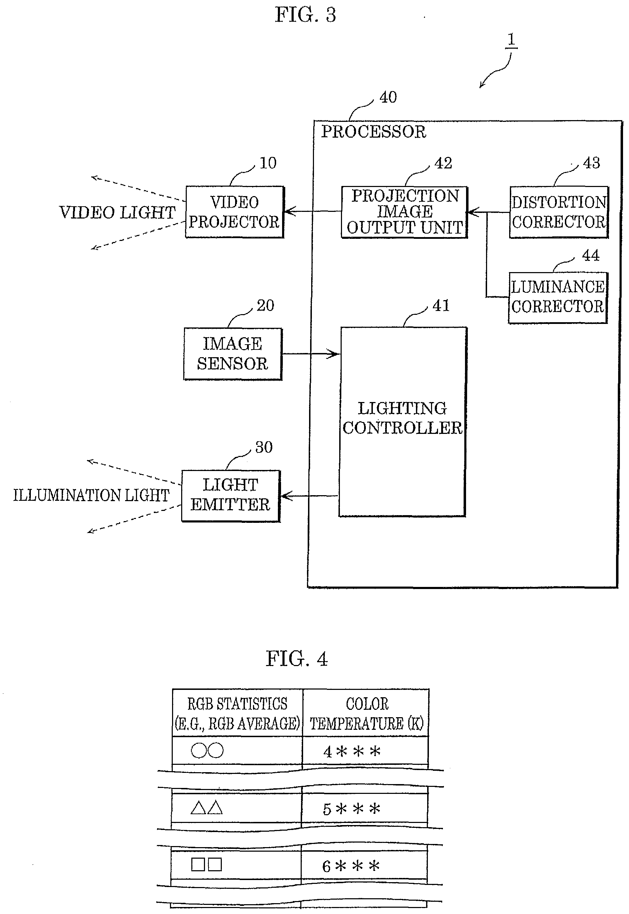

The lighting system according to Embodiment 1 will be described with reference to FIG. 1 to FIG. 3. FIG. 1 schematically illustrates a specific example of the application of lighting system 1 according to Embodiment 1. FIG. 2 illustrates a schematic structure of lighting system 1 and an example of an image captured in lighting system 1. FIG. 3 is a block diagram illustrating a configuration of lighting system 1.

As illustrated in FIG. 1 to FIG. 3, lighting system 1 includes video projector 10, image sensor 20, light emitter 30, and processor 40.

The present exemplary embodiment describes the case where lighting system 1 is used indoors such as in a store or in a residential house. As illustrated in FIG. 1, video projector 10, image sensor 20, and light emitter 30 are installed, for example, inside a room. To be more specific, video projector 10 and image sensor 20 are installed, for example, in the ceiling of the room whereas light emitter 30 is installed on the wall surface of the room, but the installation locations are not limited to this. For example, light emitter 30 may be installed in the ceiling, and video projector 10 and image sensor 20 may be installed on the wall or floor surface.

Note that although video projector 10 and image sensor 20 are installed in different locations and therefore the viewing points thereof are different, they may be installed in the same location. In this case, video projector 10 and image sensor 20 may configure one apparatus and provide the same view point.

Video projector 10 is a video projecting device which projects video images onto projection surface 2. In the present exemplary embodiment, video projector 10 projects video images in the condition where light emitter 30 is turned on (i.e., in an illuminated environment). In other words, the video images from video projector 10 are projected onto projection surface 2 in bright conditions.

Projection surface 2 onto which the video images from video projector 10 are projected may be either flat or three-dimensional surface, including any sorts of structures or animals and plants. As illustrated in FIG. 1 and FIG. 2, projection surface 2 according to the present exemplary embodiment is a wall surface of a room. For example, a video image presenting a live football match is projected by video projector 10 onto projection surface 2. Note that projection surface 2 is not limited to a wall surface, and it may be a floor surface, the surface of a desk, a screen, or the like.

Video projector 10 has a light source such as a semiconductor laser or a lamp, an optical system such as lenses and mirrors, a display device such as a liquid crystal display, projection lenses, and so on. For example, when a video image to be projected on projection surface 2 is input from processor 40 to video projector 10, the video image is projected from the projection lenses of video projector 10 towards projection surface 2. Note that, in the present description, the term "video image (or image)" may be referred to as either a still image or a moving picture.

In the present exemplary embodiment, video projector 10 has not only a function to project video images but also a function to emit illumination light onto projection surface 2. In other words, video projector 10 can project video images (lighting pattern) as illumination light.

Thus, video projector 10 is a light-projecting device which projects both video light (video image) and illumination light. With such function, video projector 10 is capable of producing lighting effects as well as visual effects. In this case, the video light and the illumination light may be projected so that these lights are temporally and spatially superimposed or may be projected so that the lights are switched at different timings. In the former case, video images are projected from video projector 10 in such a manner that the video light and the illumination light are superimposed. Note that the light source for illumination light and the light source for video light may be the same or different. Moreover, video projector 10 may have dimming and toning functions so that the brightness or color components of the illumination light to be projected can be changed.

Image sensor 20 is an imaging device such as a camera, and captures a video image projected by video projector 10. More specifically, image sensor 20 defines, as an image capture region, a region including the video image projected onto projection surface 2, and captures an image of the image capture region, as illustrated in FIG. 2. This means that the image (captured image) captured by image sensor 20 includes the video image projected onto projection surface 2. In the present exemplary embodiment, an image capture region captured by image sensor 20 corresponds to a region in which the video image projected onto projection surface 2 is presented.

Image sensor 20 has, for example, an imaging device such as a CCD image sensor or a CMOS image sensor, and an optical system or the like. The image (image data) captured by image sensor 20 is transmitted to processor 40.

Light emitter 30 is a lighting apparatus which emits illumination light, and is, for example, a spot light installed on the wall surface of a room. Note that light emitter 30 may be a ceiling light or a downlight installed in the ceiling of a room.

Light emitter 30 illuminates inside the room. This means that the illumination light emitted by light emitter 30 illuminates inside the room. More specifically, light emitter 30 emits the illumination light onto a floor surface, a wall surface (including projection surface 2), or the like.

Light emitter 30 has a light source such as an LED or a lamp. Light emitter 30 has a light source that is different from that of video projector 10. In other words, light emitter 30 emits illumination light using the light source different from that of video projector 10. The illumination light of light emitter 30 is, for example, white light but the color of the light is not limited to white.

In the present exemplary embodiment, light emitter 30 has red, green, and blue light sources, and is capable of RGB control. Namely, the red, green, and blue light sources can be controlled independently. These light sources may be LED or existing lamp light sources.

In addition, light emitter 30 has dimming and toning functions and is configured to control at least one of brightness and chrominance of illumination light. For example, light emitter 30 can increase or decrease the light output of the illumination light based on a control signal from lighting controller 41 of processor 40. In addition, light emitter 30 can selectively increase or decrease at least one of red, green, and blue components of the illumination light based on the control signal from lighting controller 41.

Light emitter 30 thus configured is controlled based on the control signal transmitted from lighting controller 41. More specifically, the illumination light of light emitter 30 is adjusted based on the control signal from lighting controller 41 which is based on the results of analysis on the image captured by image sensor 20. For example, dimming and toning of light emitter 30 is controlled based on this control signal so that the illumination light matches with the video images to be projected by video projector 10.

Processor 40 is a processing device having a function to perform various arithmetic operations. Processor 40 has lighting controller 41, projection image output unit 42, distortion corrector 43, and luminance corrector 44.

Moreover, processor 40 also has a function to transmit and receive signals to and from video projector 10, image sensor 20, and light emitter 30. In other words, processor 40 has a communication unit such as an interface. The transmission and reception of the signals between processor 40 and video projector 10, image sensor 20, or light emitter 30 may be performed in a wired or wireless manner. As illustrated in FIG. 2, a personal computer (PC) can be used, for example, as processor 40.

Lighting controller 41 controls light emitter 30. Lighting controller 41 controls illumination light of light emitter 30, using the statistics related to RGB of a region which is at least a part of the image captured by image sensor 20.

To be more specific, lighting controller 41 obtains an image captured by image sensor 20 capturing a video image projected by video projector 10 (i.e., an image including a projection image), calculates statistics related to RGB of the captured image by analyzing the obtained captured image. Lighting controller 41 then generates, using the statistics related to RGB, a control signal that causes the illumination light of light emitter 30 to match with the video images to be projected by video projector 10. Then, lighting controller 41 transmits the generated control signal to light emitter 30. Dimming and toning of light emitter 30 is controlled based on this control signal.

Lighting controller 41 calculates, as the statistics related to RGB (RGB statistics), RGB average (average values of R, G, and B) of the entire image captured by image sensor 20, based on the RGB component (RGB signal) of each pixel in the captured image, and controls light emitter 30 so that the color of the illumination light accords with the color represented by the calculated RGB average. In this case, the control signal transmitted from lighting controller 41 to light emitter 30 is a control signal such that the color represented by the calculated RGB average accords with the color of the illumination light emitted by light emitter 30.

In the present exemplary embodiment, lighting controller 41 controls the illumination light of light emitter 30 by converting the statistics related to RGB into a color temperature. For example, in the case of using RGB average of an entire captured image, as the statistics related to RGB, as has been described above, with the use of the conversion table as illustrated in FIG. 4, it is possible to control the illumination light of light emitter 30 by converting the statistics related to RGB (RGB average) into a color temperature.

FIG. 4 illustrates an example of the conversion table indicating the correspondence between RGB statistics (RGB average) and color temperature, according to lighting system 1 of the exemplary embodiment. This conversion table is, for instance, previously stored as a look-up table in the storage of processor 40. As illustrated in FIG. 4, an RGB average and a color temperature are previously set in one-to-one correspondence in the conversion table. Therefore, through the calculation of the RGB average based on a captured image, it is possible to selectively determine the color temperature of the illumination light of light emitter 30.

The data representing the selectively determined color temperature (K) is transmitted as a control signal from lighting controller 41 to light emitter 30. Light emitter 30, having received the color temperature data, converts the color temperature to each of the values R, G, and B, and subsequently controls each of red, green, and blue light sources. This enables light emitter 30 to emit the illumination light at the color temperature selectively determined by lighting controller 41.

Note that although RGB average is used as statistics related to RGB in the present exemplary embodiment, the statistics related to RGB are not limited to RGB average and median or mode values of RGB values may be used instead. In addition, RGB represents the three primary colors of light, that is, red (R), green (G), and blue (B), whereas HSV (or HSB) represents the three elements of color, that is, hue (H), saturation (S), and value (V) or brightness (B).

Projection image output unit 42 outputs, to video projector 10, a video image to be projected by video projector 10. Note that processor 40 may have functions to play and stop the video image outputted to video projector 10.

Distortion corrector 43 corrects the distortion of a video image to be projected. Distortion corrector 43 corrects, for example, the geometric distortion (trapezoid distortion) of the video image to be projected by video projector 10.

Luminance corrector 44 corrects the luminance of a video image to be projected. Luminance corrector 44 corrects, for example, a whole or part of the luminance of the video image to be projected by video projector 10.

Note that processor 40 may have a storage (memory). The storage stores the data processed or calculated by processor 40 or the video image (video content) outputted from projection video output unit 42 to video projector 10. In addition, the storage is also used for the control processing performed by processor 40, and for example, stores data when necessary, serving as a work area for lighting controller 41 and others to perform various data processing and arithmetic operations, and. Moreover, an application program or the like for controlling video projector 10, image sensor 20, and light emitter 30 may be stored in the storage.

Furthermore, processor 40 may have an image obtainer (an image input unit) which obtains a video image to be projected by video projector 10. The image obtainer obtains, as an input video image, the video image to be projected by video projector 10. The input video image may be obtained from a storage medium such as an SD card detachably attached to processor 40, from an external device either via a communication line such as an HDMI (registered trademark) cable connected to processor 40 or using a wireless communication such as Wi-Fi.

As has been described above, according to lighting system 1 of the present exemplary embodiment, image sensor 20 captures a video image projected by video projector 10, and the illumination light of light emitter 30 is controlled using the statistics related to RGB of a region that is at least a part of the captured image. More specifically, lighting controller 41 controls the illumination light of light emitter 30 so that the illumination light matches with the video images to be projected by video projector 10.

This allows the emission of the illumination light that matches with video images to be projected, even in the condition where light emitter 30 is turned on (i.e., in an illuminated environment).

In addition, in the present exemplary embodiment, lighting controller 41 controls the illumination light of light emitter 30 by converting the statistics related to RGB of the image captured by image sensor 20 into a color temperature.

This allows the control of the illumination light of light emitter 30 within the range of the normal color (white color) of illumination light. Thus, it is possible to emit the illumination light that matches with the video images to be projected, while maintaining the lighting environment emitting the illumination light of natural color.

Moreover, although lighting controller 41 converts the statistics related to RGB using the conversion table illustrated in FIG. 4 in the present exemplary embodiment, the conversion method is not limited to this.

For example, lighting controller 41 may control the illumination light of light emitter 30 by converting the statistics related to RGB of an image captured by image sensor 20 into a color temperature obtained by a perpendicular line drawn from a point representing the statistics to a black body locus. In other words, the statistics related to RGB may be converted into a color temperature by performing linear approximation of the statistics to the black body locus.

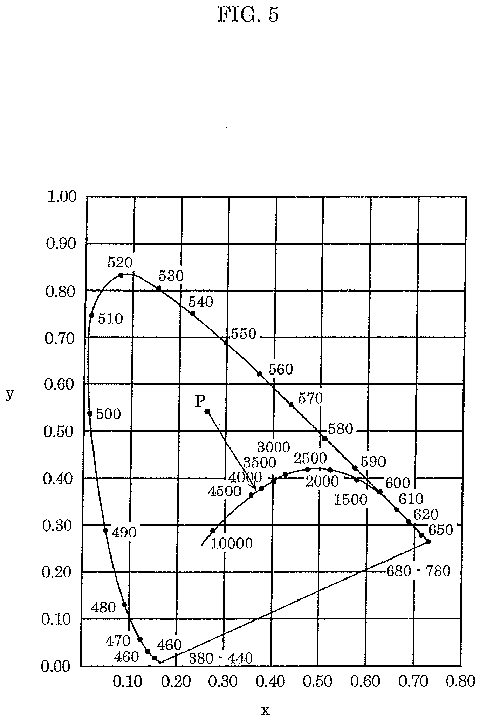

In this case, the statistics related to RGB can be converted into a color temperature using, for example, an xy chromaticity diagram, as illustrated in FIG. 5. To be more specific, in the case of using RGB average as statistics related to RGB, when the RGB average calculated by lighting controller 41 is defined as point P in FIG. 5, a perpendicular line is drawn from point P to the black body locus, and the illumination light of light emitter 30 can be controlled based on the color temperature at the intersection point at which the vertical line and the black body locus intersect.

Thus, by converting the statistics related to RGB into the color temperature obtained by the perpendicular line drawn to the black body locus, the conversion can be achieved with a relatively high processing speed. Accordingly, it is possible to rapidly control the illumination light of light emitter 30. Note that RGB average, for example, can be used as statistics related to RGB, but a different measurable factor may be used instead.

Alternatively, lighting controller 41 may control the illumination light of light emitter 30 by converting the statistics related to RGB of an image captured by image sensor 20 into a luminance signal and a chrominance signal, attenuating the chrominance signal, and subsequently converting back the luminance signal and the chrominance signal into an RGB signal.

In this case, light emitter 30 controls each optical output (emission intensity) of red, green and blue light sources according to 8-bit data of R, G, and B values in the RGB signal received from lighting controller 41. Note that RGB average, for example, can be used as statistics related to RGB, but a different measurable factor may be used instead.

Thus, by converting statistics related to RGB into a luminance signal and a chrominance signal and subsequently controlling the chrominance signal, the illumination light of light emitter 30 can be controlled so that the color of the illumination light gets close to the normal color (white color) of illumination light.

Note that the illumination light of light emitter 30 may be controlled by converting statistics related to RGB into a luminance signal and a chrominance signal, and instead of controlling only the chrominance signal, controlling both the converted luminance and chrominance signals, and subsequently converting back these signals into an RGB signal.

Moreover, lighting system 1 according to the present exemplary embodiment includes distortion corrector 43 which corrects the distortion of a video image to be projected and luminance corrector 44 which corrects the luminance of the video image.

This enables the distortion and luminance corrections of the video images to be projected by video projector 10. It is therefore possible to project the video images with more improved visibility.

### Variations

The lighting system according to the present invention has been described based on the exemplary embodiments. The present invention, however, shall not be limited to the above-described exemplary embodiments.

For example, distortion corrector 43 and luminance corrector 44 are placed in processor 40 in above-described Embodiments 1 and 2, but the locations of these correctors are not limited to this. Distortion corrector 43 and luminance corrector 44 may be provided in video projector 10.

In addition, in above-described Embodiments 1 and 2, although an image obtainer is placed in processor 40, the location of the image obtainer is not limited to this. The image obtainer may be directly placed in video projector 10, and an input video image may be directly input into video projector 10.

Moreover, above-described Embodiments 1 and 2 have described the case of using the lighting system indoors such as in a room, but the location for using the system is not limited to this. For example, the lighting systems according to above-described Embodiments 1 and 2 may be used outdoors.

Moreover, although light emitter 30 is controlled using the statistics related to RGB of a captured image in the present exemplary embodiment, a different measurable factor may be used instead. In other words, the illumination light of light emitter 30 may be controlled so as to match with video images to be projected, using a different characteristic parameter instead of using the statistics related to RGB of the captured image.

Forms obtained by various modifications to the exemplary embodiment that can be conceived by a person of skill in the art as well as forms realized by arbitrarily combining structural components and functions in the exemplary embodiment which are within the scope of the essence of the present disclosure are included in the present disclosure.

Moreover, in the above description, the configuration of each of the components in processor 40 may be a circuit. These circuits may be configured into one circuit as a whole or may be configured as different circuits. Furthermore, the respective circuits may be general or dedicated circuits.

Moreover, a computer may function as the above-described lighting system. In this case, each processing described as an operation of each of the structural components, such as above-described processor 40, used in the lighting system can be executed by the computer. For example, by the computer executing a program using hardware resources such as a processor (CPU), a memory, and an I/O circuit, each of the above-described processing is carried out. To be more specific, each processing is executed by the processor obtaining data to be processed from a memory or I/O circuit and thereby computing the data, and outputting the computing results to the memory or I/O circuit. As an example, processor 40 is a laptop PC.

Moreover, the above-described lighting system may be realized as a lighting control method. In this case, the steps in the lighting control method can be executed by a computer.

Moreover, a program for executing each of the above-described processes or steps may be stored in a non-transitory storage medium such as a computer-readable CD-ROM. In this case, a computer executes each process by reading the program from the non-transitory storage medium and executing the program. For example, the present invention may be realized as a program that causes a computer to execute the method according to the above-described lighting system or as a computer-readable storage medium in which such program is stored.

### REFERENCE MARKS IN THE DRAWINGS

- 1: lighting system
- 2: projection surface
- 10: video projector
- 20: image sensor
- 30: light emitter
- 41: lighting controller
- 43: distortion corrector
- 44: luminance corrector

## Claims

1. A lighting system comprising:
a video projector which projects a video image;
an image sensor which captures the video image projected by the video projector;
a light emitter which emits illumination light using a light source different from a light source of the video projector; and
a lighting controller which controls the illumination light using statistics related to RGB of a region which is at least a part of the video image captured by the image sensor.

2. The lighting system according to claim 1,
wherein the lighting controller controls the illumination light by converting the statistics related to RGB into a color temperature.

3. The lighting system according to claim 2,
wherein the lighting controller controls the illumination light by converting the statistics related to RGB into a color temperature obtained by a perpendicular line drawn from a point representing the statistics to a black body locus, and .

4. The lighting system according to claim 1,
wherein the lighting controller controls the illumination light by (i) converting the statistics related to RGB into a luminance signal and a chrominance signal, (ii) attenuating the chrominance signal, and (iii) subsequently converting back the luminance signal and the chrominance signal into an RGB signal.

5. The lighting system according to any one of claims 1 to 4, further comprising:
a distortion corrector which corrects distortion of a video image to be projected; and
a luminance corrector which corrects luminance of the video image to be projected.

6. A program for causing a computer to function as the lighting system according to any one of claims 1 to 5.
